# EUROPEAN PATENT APPLICATION

(11) **EP 4 535 439 A1**
(43) Date of publication of application: **09.04.2025**
(21) Application number: 22948555.2
(22) Date of filing: 30.06.2022
(51) Int. Cl.: H01M 4/02, H01M 4/58

(54) **POSITIVE ELECTRODE ACTIVE MATERIAL, ELECTROCHEMICAL DEVICE AND ELECTRICAL DEVICE**

(71) Applicant: Ningde Amperex Technology Limited, Ningde, Fujian 352100 (CN)
(72) Inventor: YUAN, Guoxia, Ningde, Fujian 352100 (CN); LANG, Ye, Ningde, Fujian 352100 (CN); XU, Leimin, Ningde, Fujian 352100 (CN)
(74) Representative: Klunker IP Patentanwälte PartG mbB
(86) International application number: PCT/CN2022/102947
(87) International publication number: WO 2024/000452

(57) **Abstract**

This application discloses a positive active material, an electrochemical device, and an electrical device. The positive active material of this application includes a lithium manganese oxide. An X-ray diffraction pattern of the positive active material exhibits a first diffraction peak in a range of 14.3° to 16.3°, and exhibits a second diffraction peak in a range of 17.3° to 19.3°. The positive active material of this application achieves a high specific charge capacity and high structural stability, and can increase the energy density and lifespan of the electrochemical device.

## Description

### TECHNICAL FIELD

This application relates to the technical field of batteries, and in particular, to a positive active material, an electrochemical device, and an electrical device.

### BACKGROUND

In order to solve the critical issues such as global energy crisis, environmental pollution, climate change, and low-carbon economy, the research and application of electric vehicles, large-scale power supplies, and energy storage power supplies have become inevitable. Spinel LiMn₂O₄ and olivine-type LiFePO₄ are widely used as positive active materials by virtue of cost-effectiveness, high first-cycle Coulombic efficiency, and high safety and reliability. However, because the low charge capacity of the spinel LiMn₂O₄ and olivine-type LiFePO₄, and active lithium is consumed at a negative electrode to form a solid electrolyte interface (SEI) film, and for the purpose of ensuring safety, the negative active material is usually surplus, thereby resulting in a low level of exertion of capacity of the LiMn₂O₄ or LiFePO₄ in a battery. Moreover, with the destruction and regeneration of the SEI film during cycling, the active lithium is further consumed, thereby reducing the structural stability of the spinel LiMn₂O₄ and the olivine-type LiFePO₄ in the charging state of the battery, and deteriorating the lifespan of the battery.

### SUMMARY

In view of the above problems in the prior art, this application provides a positive active material, an electrochemical device, and an electrical device to solve the problems in the prior art to some extent.

According to a first aspect, this application provides a positive active material. The positive active material includes a lithium manganese oxide. An X-ray diffraction pattern of the positive active material exhibits a first diffraction peak in a range of 14.3° to 16.3°, and exhibits a second diffraction peak in a range of 17.3° to 19.3°. Where, the first diffraction peak is a (010) characteristic peak of an o-phase (cubic phase) in the lithium manganese oxide. The second diffraction peak is a (001) characteristic peak of the m-phase (monoclinic phase) in the lithium manganese oxide. Through coexistence of the o-phase and the m-phase in the lithium manganese oxide, a solid solution is formed, thereby improving the structural stability of the lithium manganese oxide in the electrochemical device in a charging state. Oxygen vacancies exist in the solid solution formed by the coexistence of the two phases, and can facilitate deintercalation of lithium ions, thereby improving the specific charge capacity of the lithium manganese oxide. In addition, through the synergistic effect of the solid solution, the stability of the Mn-O bond is enhanced, thereby suppressing the dissolution of Mn in the lithium manganese oxide, and in turn, improving the service life of the electrochemical device.

In some embodiments, the X-ray diffraction pattern of the positive active material exhibits a third diffraction peak in a range of 45.7° to 47.7°. Where, the third diffraction peak corresponds to the (111) crystal plane of the m-phase in the lithium manganese oxide. The existence of this crystal plane can stabilize the m-phase crystal structure, thereby improving the first-cycle Coulombic efficiency of the lithium manganese oxide.

In some embodiments, a peak intensity of the first diffraction peak is I_{A}, and a peak intensity of the second diffraction peak is I_{B}, satisfying: 0.05 ≤ I_{A}/I_{B} ≤ 20.

In some embodiments, 0.05 ≤ I_{A}/I_{B} ≤ 0.9, or 6 ≤ I_{A}/I_{B} ≤ 20. In this case, there is a considerable difference between the contents of the m-phase and the o-phase in the lithium manganese oxide. The two phases can work synergistically to form a solid solution to facilitate deintercalation of lithium ions in the lithium manganese oxide, thereby further improving the specific charge capacity of the lithium manganese oxide.

In some embodiments, a full-width-at-half-maximum of the first diffraction peak is W_{A}, and a full-width-at-half-maximum of the second diffraction peak is W_{B}, satisfying: 0.3 ≤ W_{A}/W_{B} ≤ 3.

In some embodiments, 0.75 ≤ W_{A}/W_{B} ≤ 1.65. In this case, both the full-width-at-half-maximum of the o-phase and the full-width-at-half-maximum of the m-phase in the lithium manganese oxide are relatively narrow, and the structural stability is higher, thereby further suppressing the dissolution of Mn in the lithium manganese oxide and improving the service life of the electrochemical device.

In some embodiments, the peak intensity of the second diffraction peak is I_{B}, and a peak intensity of the third diffraction peak is I_{C}, satisfying: 0.08 ≤ I_{C}/I_{B} ≤ 0.35. In this case, the peak intensity of the third diffraction peak is relatively high, and the m-phase contains relatively few crystal defects, thereby improving the first-cycle Coulombic efficiency of the positive active material.

In some embodiments, the lithium manganese oxide contains an M element, the M element includes at least one of Cr, Al, Mg, Ti, Y, Nb, W, Ga, Zr, V, Sr, Mo, Ru, Ag, Sn, Au, La, Ce, Pr, Nd, Sm, Gd, Cu, Na, Zn, Fe, Co, Ni, or Ca, and a molar ratio between the M element and Mn element in the lithium manganese oxide is 0.001: 1 to 0.1: 1. The presence of the M element in the lithium manganese oxide facilitates formation of the monoclinic phase, thereby improving the structural stability of the lithium manganese oxide, suppressing the dissolution of Mn, and in turn, improving the service life of the electrochemical device.

In some embodiments, an average particle diameter Dᵥ₅₀ of the positive active material is 2 µm to 35 µm.

In some embodiments, the lithium manganese oxide has a layered structure. The layered structure is conducive to the deintercalation of lithium ions from the lithium manganese oxide, thereby improving the specific charge capacity of the lithium manganese oxide.

In some embodiments, a molar ratio between Li element and Mn element in the positive active material is 0.9 to 1.15.

In some embodiments, the lithium manganese oxide includes LiₓMn_{y}M_{z}O₂, where 0.9 ≤ x ≤ 1.15, 0.9 ≤ y ≤ 1, 0 ≤ z ≤ 0.1, and M includes at least one of Cr, Al, Mg, Ti, Y, Nb, W, Ga, Zr, V, Sr, Mo, Ru, Ag, Sn, Au, La, Ce, Pr, Nd, Sm, Gd, Cu, Na, Zn, Fe, Co, Ni, or Ca. In some embodiments, 0.9 ≤ x ≤ 1.2, 0.9 ≤ y ≤ 1, and 0.001 ≤ z ≤ 0.1.

In some embodiments, when a button battery is assembled from the positive active material and lithium metal, a differential capacity versus voltage dQ/dV curve of the button battery charged in a first cycle exhibits a characteristic peak in a voltage range of 3.5 V to 3.7 V and a characteristic peak in a voltage range of 3.85 V to 4.05 V, and a differential capacity versus voltage dQ/dV curve of the button battery discharged in the first cycle exhibits a characteristic peak in a voltage range of 3.8 V to 4.0 V. The range of 3.5 V to 3.7 V corresponds to the charge capacity of the o-phase, and the range of 3.85 V to 4.05 V corresponds to the charge capacity of the m-phase. The differential capacity versus voltage dQ/dV curve of the button cell charged in the first cycle exhibits characteristic peaks in the voltage range of 3.5 V to 3.7 V and the voltage range of 3.85 V to 4.05 V, indicating that the two phases coexist in the lithium manganese oxide and work synergistically to improve the specific charge capacity of the lithium manganese oxide. The differential capacity versus voltage dQ/dV curve of the button battery discharged in the first cycle exhibits a characteristic peak in the voltage range of 3.8 V to 4.0 V, indicating that a uniform phase is formed when lithium ions are intercalated back into the lithium manganese oxide, thereby improving the stability of the material.

According to a second aspect, this application provides a method for preparing a positive active material. The method includes: mixing a manganese-containing oxide, a lithium source, and optionally an M element source to obtain a mixture; and calcining the mixture in a first atmosphere at a first temperature to obtain the positive active material, where the manganese-containing oxide is mixed with the lithium source at a Li/Mn molar ratio of 0.90 to 1.15 between lithium and manganese, and the first atmosphere is an inert atmosphere.

In some embodiments, the inert atmosphere includes at least one of nitrogen, argon, or helium.

In some embodiments, the first temperature is 880 °C to 1100 °C.

In some embodiments, the calcination duration time is 5 hours to 20 hours.

In some embodiments, the manganese-containing oxide includes Mn₃O₄.

In some embodiments, the M element includes at least one of Cr, Al, Mg, Ti, Y, Nb, W, Ga, Zr, V, Sr, Mo, Ru, Ag, Sn, Au, La, Ce, Pr, Nd, Sm, Gd, Cu, Na, Zn, Fe, Co, Ni, or Ca.

In some embodiments, the M element source includes at least one of CrO₂, Al₂O₃, MgO, TiO₂, or Y₂O₃.

In some embodiments, the manganese-containing oxide and the M element source are mixed at a M:Mn molar ratio of 0.001: 1 to 0.1: 1 between the M element and Mn element.

In some embodiments, the lithium source includes at least one of lithium hydroxide, lithium carbonate, lithium acetate, lithium nitrate, or lithium sulfate.

According to a third aspect, this application provides an electrochemical device. The electrochemical device includes the positive active material according to the first aspect of this application or a positive active material prepared by the method according to the second aspect of this application.

According to a fourth aspect, this application provides an electrical device. The electrical device includes the electrochemical device according to the third aspect of this application.

This application provides a positive active material. The positive active material includes a lithium manganese oxide. Through coexistence of the o-phase (cubic phase) and the m-phase (monoclinic phase) of the lithium manganese oxide, the positive active material achieves high structural stability while achieving a relatively high specific charge capacity, and can reduce the amount of Mn dissolution in the electrochemical device in a charging state, thereby improving the service life of the electrochemical device.

Additional aspects and advantages of this application will be partly described or illustrated herein later or expounded through implementation of an embodiment of this application.

### BRIEF DESCRIPTION OF DRAWINGS

FIG. 1 is an XRD pattern of a positive active material according to Embodiment 1;
FIG. 2 shows a first-cycle charge-discharge curve of a button battery according to Embodiment 1; and
FIG. 3 shows a differential capacity versus voltage dQ/dV curve of a button battery in a first charge-discharge cycle according to Embodiment 1.

### DETAILED DESCRIPTION OF EMBODIMENTS

Some embodiments of this application will be described in detail below. The embodiments of this application should not be construed as a limitation on this application.

In addition, a quantity, a ratio, or another numerical value herein is sometimes expressed in the format of a range. Understandably, such a range format is set out for convenience and brevity, and needs to be flexibly understood to include not only the numerical values explicitly specified and defined by the range, but also all individual numerical values or sub-ranges covered in the range as if each individual numerical value and each sub-range were explicitly specified.

In the embodiments and claims, a list of items recited by using the terms such as "at least one of", "at least one thereof", "at least one type of" or other similar terms may mean any combination of the recited items. For example, if items A and B are listed, the phrases "at least one of A and B" and "at least one of A or B" mean: A alone; B alone; or both A and B. In another example, if items A, B, and C are listed, the phrases "at least one of A, B, and C" and "at least one of A, B, or C" mean: A alone; B alone; C alone; A and B (excluding C); A and C (excluding B); B and C (excluding A); or all of A, B, and C. The item A may include a single element or a plurality of elements. The item B may include a single element or a plurality of elements. The item C may include a single element or a plurality of elements.

### I. Electrochemical device

In some embodiments, this application provides an electrochemical device. The electrochemical device includes a positive electrode, a negative electrode, and an electrolyte solution.

### 1. Positive electrode

In some embodiments, the positive electrode includes a positive current collector and a positive electrode material layer located on at least one surface of the positive current collector. The positive electrode material layer includes a positive active material. The positive active material includes a lithium manganese oxide. An X-ray diffraction pattern of the positive active material exhibits a first diffraction peak in a range of 14.3° to 16.3°. In some embodiments, the X-ray diffraction pattern of the positive active material exhibits a first diffraction peak in a range of 14.5° to 16°. In some embodiments, the X-ray diffraction pattern of the positive active material exhibits a first diffraction peak in a range of 14.8° to 15.8°. In some embodiments, the X-ray diffraction pattern of the positive active material exhibits a first diffraction peak in a range of 15° to 15.6°.

In some embodiments, the X-ray diffraction pattern of the positive active material exhibits a second diffraction peak in a range of 17.3° to 19.3°. In some embodiments, the X-ray diffraction pattern of the positive active material exhibits a second diffraction peak in a range of 17.5° to 19°. In some embodiments, the X-ray diffraction pattern of the positive active material exhibits a second diffraction peak in a range of 17.8° to 18.8°. In some embodiments, the X-ray diffraction pattern of the positive active material exhibits a second diffraction peak in a range of 18° to 18.5°.

The first diffraction peak is a (010) characteristic peak of an o-phase (cubic phase) in the lithium manganese oxide. The second diffraction peak is a (001) characteristic peak of the m-phase (monoclinic phase) in the lithium manganese oxide. Through coexistence of the o-phase and the m-phase in the lithium manganese oxide, a solid solution is formed, thereby improving the structural stability of the lithium manganese oxide in the electrochemical device in a charging state. Oxygen vacancies exist in the solid solution formed by the coexistence of the two phases, and can facilitate deintercalation of lithium ions, thereby improving the specific charge capacity of the lithium manganese oxide. In addition, through the synergistic effect of the solid solution, the stability of the Mn-O bond is enhanced, thereby suppressing the dissolution of Mn in the lithium manganese oxide, and in turn, improving the service life of the electrochemical device.

In some embodiments, the X-ray diffraction pattern of the positive active material exhibits a third diffraction peak in a range of 45.7° to 47.7°. In some embodiments, the X-ray diffraction pattern of the positive active material exhibits a third diffraction peak in a range of 46° to 47.5°. In some embodiments, the X-ray diffraction pattern of the positive active material exhibits a third diffraction peak in a range of 46.4° to 47°. The third diffraction peak corresponds to the (111) crystal plane of the m-phase in the lithium manganese oxide. The existence of this crystal plane can stabilize the m-phase crystal structure, thereby improving the first-cycle Coulombic efficiency of the lithium manganese oxide.

In some embodiments, a peak intensity of the first diffraction peak is I_{A}, and a peak intensity of the second diffraction peak is I_{B}, satisfying: 0.05 ≤ I_{A}/I_{B} ≤ 20. In some embodiments, the I_{A}/I_{B} value is 0.05, 0.08, 0.09, 0.15, 0.05, 0.06, 0.08, 0.09, 0.1, 0.15, 0.5, 0.8, 13, 1.5, 2, 3, 5, 8, 9, 10, 12, 14, 16, 18, 20, or a range formed by any two thereof.

In some embodiments, 0.05 ≤ I_{A}/I_{B} ≤ 0.9, or 6 ≤ I_{A}/I_{B} ≤ 20. In this case, there is a considerable difference between the contents of the m-phase and the o-phase in the lithium manganese oxide. The two phases can work synergistically to form a solid solution to facilitate deintercalation of lithium ions in the lithium manganese oxide, thereby further improving the specific charge capacity of the lithium manganese oxide.

In some embodiments, a full-width-at-half-maximum of the first diffraction peak is W_{A}, and a full-width-at-half-maximum of the second diffraction peak is W_{B}, satisfying: 0.3 ≤ W_{A}/W_{B} ≤ 3. In some embodiments, the W_{A}/W_{B} value is 0.3, 0.5, 0.6, 0.8, 1, 1.2, 1.4, 1.6, 1.8, 2.0, 2.5, 2.8, or 3, or a range formed by any two thereof.

In some embodiments, 0.75 ≤ W_{A}/W_{B} ≤ 1.65. In this case, both the full-width-at-half-maximum of the o-phase and the full-width-at-half-maximum of the m-phase in the lithium manganese oxide are relatively narrow, and the structural stability is higher, thereby further suppressing the dissolution of Mn in the lithium manganese oxide and improving the service life of the electrochemical device.

In some embodiments, the peak intensity of the second diffraction peak is I_{B}, and a peak intensity of the third diffraction peak is I_{C}, satisfying: 0.08 ≤ I_{C}/I_{B} ≤ 0.35. In some embodiments, the I_{C}/I_{B} value is 0.08, 0.1, 0.13, 0.15, 0.18, 0.2, 0.25, 0.28, 0.3, 0.32, 0.35, or a range formed by any two thereof. In this case, the peak intensity of the third diffraction peak is relatively high, and the m-phase contains relatively few crystal defects, thereby improving the first-cycle Coulombic efficiency of the positive active material.

In some embodiments, the lithium manganese oxide contains an M element, the M element includes at least one of Cr, Al, Mg, Ti, Y, Nb, W, Ga, Zr, V, Sr, Mo, Ru, Ag, Sn, Au, La, Ce, Pr, Nd, Sm, Gd, Cu, Na, Zn, Fe, Co, Ni, or Ca, and a molar ratio between the M element and Mn element in the lithium manganese oxide is 0.001: 1 to 0.1: 1. In some embodiments, the molar ratio between M element and Mn element is 0.001: 1, 0.005: 1, 0.012: 1, 0.015: 1, 0.02: 1, 0.03: 1, 0.06: 1, 0.1: 1, or a range formed by any two thereof. The presence of the M element in the lithium manganese oxide facilitates formation of the monoclinic phase, thereby improving the structural stability of the lithium manganese oxide, suppressing the dissolution of Mn, and in turn, improving the service life of the electrochemical device.

In some embodiments, an average particle diameter Dᵥ₅₀ of the positive active material is 2 µm to 35 µm. In some embodiments, the average particle diameter Dᵥ₅₀ of the positive active material is 2 µm, 4 µm, 6 µm, 8 µm, 10 µm, 12 µm, 14 µm, 16 µm, 18 µm, 20 µm, 24 µm, 26 µm, 28 µm, 30 µm, 32 µm, 35 µm, or a range formed by any two thereof.

In some embodiments, the lithium manganese oxide has a layered structure. The layered structure is conducive to the deintercalation of lithium ions from the lithium manganese oxide, thereby improving the specific charge capacity of the electrochemical device.

In some embodiments, a molar ratio between Li element and Mn element in the positive active material is 0.9 to 1.15.

In some embodiments, the lithium manganese oxide includes LiₓMn_{y}M_{z}O₂, where 0.9 ≤ x ≤ 1.15, 0.9 ≤ y ≤ 1, 0 ≤ z ≤ 0.1, and M includes at least one of Cr, Al, Mg, Ti, Y, Nb, W, Ga, Zr, V, Sr, Mo, Ru, Ag, Sn, Au, La, Ce, Pr, Nd, Sm, Gd, Cu, Na, Zn, Fe, Co, Ni, or Ca. In some embodiments, 0.9 ≤ x ≤ 1.2, 0.9 ≤ y ≤ 1, and 0.001 ≤ z ≤ 0.1.

In some embodiments, when a button battery is assembled from the positive active material and lithium metal, a differential capacity versus voltage dQ/dV curve of the button battery charged in a first cycle exhibits a characteristic peak in a voltage range of 3.5 V to 3.7 V and a characteristic peak in a voltage range of 3.85 V to 4.05 V. The range of 3.5 V to 3.7 V corresponds to the charge capacity of the o-phase, and the range of 3.85 V to 4.05 V corresponds to the charge capacity of the m-phase. The differential capacity versus voltage dQ/dV curve of the button cell charged in the first cycle exhibits characteristic peaks in the voltage range of 3.5 V to 3.7 V and the voltage range of 3.85 V to 4.05 V, indicating that the two phases coexist in the lithium manganese oxide and work synergistically to improve the specific charge capacity of the lithium manganese oxide.

In some embodiments, the differential capacity versus voltage dQ/dV curve of the button battery discharged in the first cycle exhibits a characteristic peak in the voltage range of 3.8 V to 4.0 V. The differential capacity versus voltage dQ/dV curve of the button battery discharged in the first cycle exhibits a characteristic peak in the voltage range of 3.8 V to 4.0 V, indicating that a uniform phase is formed when lithium ions are intercalated back into the lithium manganese oxide, thereby improving the stability of the material.

In an embodiment, this application provides a method for preparing a positive active material. The method includes: mixing a manganese-containing oxide, a lithium source, and optionally an M element source to obtain a mixture; and calcining the resultant mixture in a first atmosphere at a first temperature to obtain the positive active material.

In some embodiments, the first atmosphere is an inert atmosphere. In some embodiments, the inert atmosphere includes at least one of nitrogen, argon, or helium.

In some embodiments, the first temperature is 880 °C to 1100 °C.

In some embodiments, the first temperature is 880 °C, 900 °C, 950 °C, 1000 °C, 1050 °C, 1100 °C, or a range formed by any two thereof.

In some embodiments, the calcination duration time is 5 hours to 20 hours. In some embodiments, the duration time of the first heat treatment is 5 hours, 7 hours, 9 hours, 10 hours, 12 hours, 15 hours, 18 hours, 20 hours, or a range formed by any two thereof.

In some embodiments, the manganese-containing oxide is mixed with the lithium source at a molar ratio of 0.90 to 1.15 between lithium and manganese. In some embodiments, the molar ratio between lithium and manganese is 0.90, 0.92, 0.95, 0.98, 1, 1.05, 1.1, 1.15, or a range formed by any two thereof.

In some embodiments, the manganese-containing oxide includes Mn₃O₄.

In some embodiments, the M element includes at least one of Cr, Al, Mg, Ti, Y, Nb, W, Ga, Zr, V, Sr, Mo, Ru, Ag, Sn, Au, La, Ce, Pr, Nd, Sm, Gd, Cu, Na, Zn, Fe, Co, Ni, or Ca. In some embodiments, the M element source includes at least one of CrO₂, Al₂O₃, MgO, TiO₂, or Y₂O₃.

In some embodiments, the manganese-containing oxide and the M element source are mixed at a M:Mn molar ratio of 0.001: 1 to 0.1: 1 between M element and Mn element. In some embodiments, the M:Mn molar ratio between M element and Mn element is 0.001: 1, 0.005: 1, 0.012: 1, 0.015: 1, 0.02: 1, 0.03: 1, 0.06: 1, 0.1: 1, or a range formed by any two thereof.

In some embodiments, the lithium source is at least one selected from lithium hydroxide, lithium carbonate, lithium acetate, lithium nitrate, or lithium sulfate.

In some embodiments, the positive electrode material layer includes a conductive agent. In some embodiments, the conductive agent includes at least one of graphite, conductive carbon, acetylene black, carbon black, Ketjen black, carbon dots, carbon nanotubes, graphene, or carbon nanofibers.

In some embodiments, based on the total mass of the positive electrode material layer, the mass percent of the conductive agent is 0.5% to 20%. In some embodiments, based on the total mass of the positive electrode material layer, the mass percent of the conductive agent is 0.5%, 1%, 5%, 8%, 10%, 12%, 14%, 16%, 18%, 20%, or a range formed by any two thereof.

In some embodiments, the positive electrode material layer includes a binder. In some embodiments, the binder includes at least one of styrene-butadiene rubber (SBR), water-based acrylic resin, carboxymethyl cellulose (CMC), polyvinylidene difluoride (PVDF), polytetrafluoroethylene (PTFE), polyvinyl butyral (PVB), poly(ethylene-co-vinyl acetate) (EVA), or polyvinyl alcohol (PVA).

In some embodiments, based on the total mass of the positive electrode material layer, the mass percent of the binder is 0.1% to 5%. In some embodiments, based on the total mass of the positive electrode material layer, the mass percent of the binder is 0.1%, 0.2%, 0.5%, 0.8%, 1%, 1.2%, 1.5%, 1.8%, 2%, 2.5%, 3%, 3.5%, 4%, 4.5%, 5%, or a range formed by any two thereof.

In some embodiments, the positive current collector includes a metal foil or a porous metal sheet. In some embodiments, the positive current collector includes a foil or porous sheet of metals such as aluminum, copper, nickel, titanium, or silver, or an alloy thereof. In some embodiments, the positive current collector is an aluminum foil.

In some embodiments, the thickness of the positive current collector is 5 µm to 20 µm. In some embodiments, the thickness of the positive current collector is 5 µm, 8 µm, 10 µm, 12 µm, 15 µm, 18 µm, 20 µm, or a range formed by any two thereof.

In some embodiments, the positive electrode may be obtained by the following method: mixing a positive active material, a conductive agent, and a binder in a solvent to prepare a positive electrode slurry; applying the positive electrode slurry onto a positive current collector; and drying and cold-pressing the current collector to obtain a positive electrode. In some embodiments, the solvent may include, but is not limited to, N-methyl-pyrrolidone, or the like.

### 2. Electrolyte solution

The electrolyte solution applicable to some embodiments of this application may be an electrolyte solution known in the prior art.

In some embodiments, the electrolyte solution includes an organic solvent, a lithium salt, and an additive. The organic solvent of the electrolyte solution according to this application may be any organic solvent known in the prior art suitable for use as a solvent of the electrolyte solution. The lithium salt used in the electrolyte solution according to this application is not limited, and may be any lithium salt known in the prior art. The additive in the electrolyte solution according to this application may be any additive known in the prior art suitable for use as an additive in the electrolyte solution.

In some embodiments, the organic solvent includes, but is not limited to, one or more of: cyclic carbonate, chain carbonate, cyclic carboxylate, chain carboxylate, cyclic ether, chain ether, a phosphorus-containing organic solvent, a sulfur-containing organic solvent, or an aromatic fluorine-containing solvent.

In some embodiments, the organic solvent includes at least one of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethylene propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 4-butyrolactone (GBL), sulfolane (SF), methyl sulfonyl methane (MSM), ethyl methyl sulfone (EMS), or (ethylsulfonyl)ethane (ESE).

In some embodiments, the lithium salt includes at least one of an organic lithium salt or an inorganic lithium salt.

In some embodiments, the lithium salt includes, but is not limited to: lithium hexafluorophosphate (LiPF₆), lithium tetrafluoroborate (LiBF₄), lithium difluorophosphate (LiPO₂F₂), lithium bistrifluoromethanesulfonimide LiN(CF₃SO₂)₂ (LiTFSI), lithium bis(fluorosulfonyl)imide Li(N(SO₂F)₂) (LiFSI), lithium bis(oxalato)borate LiB(C₂O₄)₂ (LiBOB), or lithium difluoro(oxalato)borate LiBF₂(C₂O₄) (LiDFOB).

In some embodiments, the concentration of the lithium salt in the electrolyte solution is 0.5 mol/L to 3 mol/L. In some embodiments, the concentration of the lithium salt in the electrolyte solution is 0.8 mol/L to 1.5 mol/L.

### 3. Negative electrode

In some embodiments, the negative electrode includes a negative current collector and a negative electrode material layer located on one surface or both surfaces of the negative current collector. The negative electrode material layer includes a negative active material. The negative electrode material layer may be one layer or a plurality of layers. Each layer in the plurality of negative electrode material layers may contain the same or different negative active materials. The negative active material is any substance that enables reversible intercalation and deintercalation of lithium ions.

In some embodiments, examples of the negative current collector include, but are not limited to, a foil or a porous sheet of a metal material such as copper, aluminum, nickel, stainless steel, or nickel-plated steel. In some embodiments, the negative current collector is a copper foil.

In some embodiments, the thickness of the negative current collector is 1 µm to 50 µm.

The negative active material is not particularly limited, as long as the material can reversibly occlude and release lithium ions. Examples of the negative active materials may include, but are not limited to, carbon materials such as graphite and hard carbon; and silicon materials such as silicon (Si), a silicon-oxygen material, and a silicon-carbon material. The negative active materials may be used alone or used in combination.

In some embodiments, the negative electrode material layer may further include a negative electrode binder. The negative electrode binder can strengthen the bonding between the particles of the negative active material and the bonding between the negative active material and the current collector. The type of the negative electrode binder is not particularly limited, as long as the material of the binder is stable to the electrolyte solution or the solvent used in manufacturing the electrode. In some embodiments, the negative electrode binder includes a resin binder. Examples of the resin binder include, but are not limited to, fluororesin, polyacrylonitrile (PAN), polyimide resin, acrylic resin, polyolefin resin, and the like. When a negative electrode slurry is prepared from an aqueous solvent, the negative electrode binder includes, but is not limited to, carboxymethyl cellulose (CMC) or a salt thereof, styrene-butadiene rubber (SBR), polyacrylic acid (PAA) or a salt thereof, polyvinyl alcohol, and the like.

In some embodiments, the negative electrode may be prepared by the following method: coating a negative current collector with a negative electrode slurry containing a negative active material, a negative electrode binder, and the like, and then drying and then cold-pressing the current collector to obtain a negative electrode.

### 4. Separator

In some embodiments, to prevent short circuits, a separator is generally disposed between the positive electrode and the negative electrode. The material and shape of the separator are not particularly limited as long as they do not significantly impair the effects of this application. The material of the separator may be resin, glass fibers, an inorganic compound, or the like that is stable to the electrolyte solution of this application. In some embodiments, the separator contains a highly liquid-retaining porous sheet or non-woven fabric shaped substance. Examples of the resin material may include, but are not limited to, polyolefin, aramid, polytetrafluoroethylene, polyethersulfone, and the like. In some embodiments, the polyolefin is polyethylene or polypropylene. In some embodiments, the polyolefin is polypropylene. The foregoing separator materials may be used alone or combined arbitrarily.

The separator may also be made of a material that is formed by stacking the foregoing materials. Examples of such material include, but are not limited to, a three-layer separator formed by sequentially stacking polypropylene, polyethylene, and polypropylene.

Examples of the inorganic compound material may include, but are not limited to, aluminum oxide, silicon dioxide, boehmite, aluminum nitride, silicon nitride, and a sulfate salt (such as barium sulfate and calcium sulfate). The inorganic compound may be in the form including, but not limited to, a particle, a sheet, or fibers.

The thickness of the separator is arbitrary. In some embodiments, the thickness of the separator is greater than 1 µm, greater than 5 µm, or greater than 8 µm. In some embodiments, the thickness of the separator is less than 50 µm, less than 40 µm, or less than 30 µm. In some embodiments, the thickness of the separator is within a range formed by any two of the foregoing values. When the thickness of the separator falls within the foregoing ranges, high insulation and mechanical strength of the separator are ensured, and high C-rate performance and energy density of the electrochemical device are ensured.

The porosity of the separator is arbitrary. In some embodiments, the porosity of the separator is greater than 10%, greater than 15%, or greater than 20%. In some embodiments, the porosity of the separator is less than 60%, less than 50%, or less than 45%. In some embodiments, the porosity of the separator is within a range formed by any two of the foregoing values. When the porosity of the separator falls within the foregoing ranges, high insulation and mechanical strength of the separator are ensured, a separator resistance can be suppressed, and the electrochemical device is endowed with high C-rate performance.

### 5. Electrochemical device

The electrochemical device according to this application includes any device in which an electrochemical reaction occurs. Specific examples of the electrochemical device include all types of primary batteries or secondary batteries. In particular, the electrochemical device is a lithium secondary battery, including a lithium metal secondary battery or a lithium-ion secondary battery.

This application further provides an electrical device containing the electrochemical device according to this application.

The uses of the electrochemical device of this application are not particularly limited, and the electrochemical device may be used in any electrical device known in the prior art. In some embodiments, the electrochemical device of this application is applicable to, but without being limited to, a notebook computer, pen-inputting computer, mobile computer, e-book player, portable phone, portable fax machine, portable photocopier, portable printer, stereo headset, video recorder, handheld cleaner, portable CD player, transceiver, electronic notepad, calculator, portable voice recorder, radio, backup power supply, electric vehicle, electric motorcycle, electric bicycle, lighting appliance, toy, game console, watch, electric tool, camera, large household storage battery, lithium-ion capacitor, and the like.

By using a lithium-ion button battery as an example, the following describes the positive active material of this application with reference to specific embodiments. A person skilled in the art understands that the embodiments of this application are merely examples but not intended to limit the protection scope of this application.

### Embodiment 1

### 1. Preparing a positive active material

(1) Placing Mn(OOH) in a crucible, heating the crucible to 500 °C at a heating rate of 5 °C/min in an air atmosphere, and keeping the temperature constant for 4 hours to obtain anhydrous Mn₃O₄;
(2) Mixing the anhydrous Mn₃O₄ obtained in step (1) with LiOH at a Li:Mn molar ratio of 1.05: 1, and then adding an M element source at a M:Mn molar ratio of 0.03: 1. Mixing the constituents for 8 hours by using a mixing device to obtain a mixture, where the M element is Al and the M element source is nano Al₂O₃.
(3) Placing the above mixture into a corundum crucible, introducing nitrogen at a rate of 2 m³/h, increasing the temperature to 940 °C at a heating rate of 5 °C/min, and sintering the mixture at 940 °C for 10 hours. Cooling down the mixture naturally to a room temperature to obtain a layered LiMnO₂ positive active material.

### 2. Preparing a positive electrode

Mixing the positive active material, a binder polyvinylidene difluoride (PVDF), and conductive carbon black at a mass ratio of 90: 5: 5, adding N-methyl-pyrrolidone (NMP), and stirring the mixture well with a vacuum mixer to obtain a positive electrode slurry, in which a solid content is 72 wt%. Applying the positive electrode slurry evenly onto one surface of a 13 µm-thick positive current collector aluminum foil, drying the coated plate at 90 °C, cold-pressing the plate, and cutting out a disc with a diameter of 1.4 cm from the plate to obtain a positive electrode.

### 3. Preparing an electrolyte solution

Mixing ethylene carbonate (EC), ethyl methyl carbonate (EMC), and diethyl carbonate (DEC) at a volume ratio of 1: 1: 1, and stirring the mixture well to obtain an organic solvent. Dissolving LiPF₆ in the organic solvent to obtain an electrolyte solution in which the concentration of LiPF₆ is 1 mol/L.

### 4. Preparing a lithium-ion button battery

Placing the obtained positive electrode, polypropylene separator, and metal lithium sheet sequentially into a button battery steel shell, and dripping a proper amount of electrolyte solution into the shell, and sealing the shell to obtain a lithium-ion button battery.

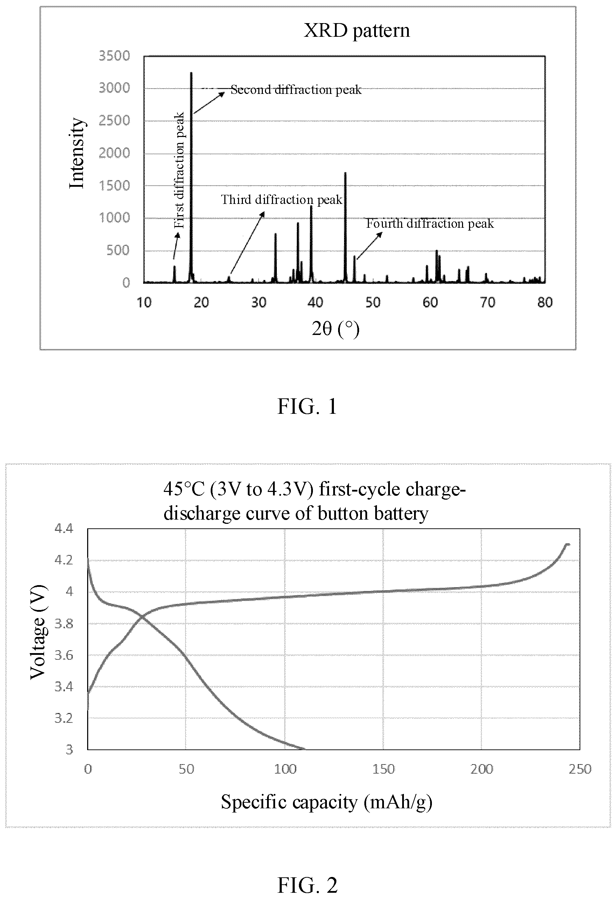

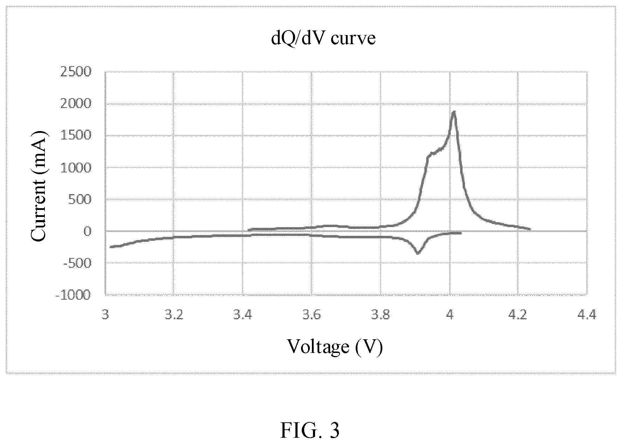

The Dᵥ₅₀ of the LiMnO₂ positive active material obtained in Embodiment 1 is 17 µm. An X-ray diffraction (XRD) pattern of the material is shown in FIG. 1. The first-cycle charge-discharge curve of the lithium-ion button battery is shown in FIG. 2. The differential capacity versus voltage dQ/dV curve in the first charge-discharge cycle is shown in FIG. 3.

The preparation method of the positive active material in Embodiments 2 to 22 differs from that in Embodiment 1 in the parameter values, as shown in Table 1. In the preparation method, the Cr source is CrO₂, the Ti source is TiO₂, the Mg source is MgO, and the Y source is Y₂O₃. In Embodiments 17 to 22, two or more types of M elements exist. Using Embodiment 17 as an example, in Embodiment 17, the M element type is "Al+Cr", and "M/Mn" is "0.02:1+0.01:1", indicating that the M elements in this embodiment are Al and Cr, the molar ratio between Al and Mn is 0.02: 1, and the molar ratio between Cr and Mn is 0.01: 1. It is the same case with Embodiments 18 to 22.

### Comparative Embodiment 1

Mixing Mn₂O₃ and Na₂CO₃ evenly at a Na:Mn molar ratio of 1.05: 1 according to a conventional method. Increasing the temperature to 800 °C at a heating rate of 5 °C/min in an N₂ atmosphere, keeping the temperature constant for 24 hours to obtain NaMnO₂, and then adding a 5 mol/L LiBr ethanol solution at a LiBr:NaMnO₂ molar ratio of 10: 1. Keeping exchanging for 8 hours at 180 °C in an air atmosphere, and then washing with ethanol. Placing the washed powder in a 120 °C oven to dry for 5 hours to obtain a lithium manganese oxide by a conventional method.

### Comparative Embodiment 2

Weighing out a specified amount of Li₂CO₃ and MnO₂ at a Li:Mn molar ratio of 0.56: 1, and adding Al₂O₃ at a Al:Mn molar ratio of 0.03. Stirring the constituents in a highspeed mixer at a rotation speed of 300 r/min for 20 minutes to obtain a mixture. Putting the mixture into an air kiln, and increasing the temperature to 790 °C at a speed of 5 °C/min, and keeping the temperature constant for 24 hours. Naturally cooling the mixture, and then taking it out. Passing the mixture through a 300-mesh sieve to obtain spinel-type lithium manganese oxide.

### Test methods

### 1. XRD test

Putting the positive active material powder into a specimen holder of an XRD test instrument (Model: Bruker D8). Scanning the specimen at a speed of 2°/min at a scan angle of 10° to 90° to obtain an XRD diffraction pattern. Reading the position, intensity, and full-width-at-half-maximum of each peak.

### 2. Morphology test

Testing the positive active material powder by using a scanning electron microscope (SEM). Observing the SEM image at a magnification of 10000.

### 3. Testing the average particle diameter

Testing the average particle diameter Dᵥ₅₀ of the positive active material by using a particle size analyzer.

Dᵥ₅₀ represents a particle diameter value at which the cumulative volume percentage reaches 50% of the total volume of all specimen particles in a volume-based particle size distribution curve viewed from a small-diameter side.

### 4. Method for testing the content of element

Dissolving the positive active material by using a mixed solvent (for example, 0.4 gram of positive active material is dissolved in a mixed solvent of 10 ml of aqua regia and 2 ml of HF, where the aqua regia is a combination of nitric acid and hydrochloric acid mixed at a ratio of 1: 1). Bringing the solution to a predetermined volume of 100 mL, and then measuring the content of each element such as M, Mn, and Li in the positive active material by using an ICP analyzer.

### 5. Charge and discharge test for the lithium-ion button battery

Performing a charge-discharge test on the lithium-ion button battery by using a LAND series battery test system to evaluate the charge-discharge performance of the lithium-ion battery. Charging the battery at a constant current of 0.1C rate at 45 °C until the voltage reaches 4.3 V. Further, charging the battery at a constant voltage of 4.3 V until the current drops to 0.05C so that the battery is in a 4.3 V fully charged state. Recording the resultant specific charge capacity as a first-cycle specific charge capacity. Subsequently, discharging the battery at a constant current of 0.1C rate until the voltage reaches 3 V. The resultant specific discharge capacity is the first-cycle specific discharge capacity. The ratio of the first-cycle specific discharge capacity to the first-cycle specific charge capacity is the first-cycle Coulombic efficiency of the battery cycled at 45 °C.

### 6. dQ/dV test

Differentiating the first-cycle charge-discharge data of the lithium-ion button battery to obtain a differential capacity versus voltage dQ/dV curve.

### 7. Mn dissolution test

Charging the lithium-ion button battery at a constant current of 0.1C rate until the voltage reaches 4 V. Disassembling the battery and taking out the positive electrode. Immersing the positive electrode in an electrolyte solution at 60 °C for 7 days. Measuring the Mn content in the electrolyte solution by an ICP method. Calculating the Mn dissolution amount as: Mn dissolution amount = Mn content in the electrolyte solution/mass of the positive active material.

### Test results

Table 1 and Table 2 shows the preparation parameters and relevant performance metrics of the positive active materials in Embodiments 1 to 22 and Comparative Embodiments 1 and 2. In the tables, I_{A} is the peak intensity of the first diffraction peak; I_{B} is the peak intensity of the second diffraction peak; W_{A} is the full-width-at-half-maximum of the first diffraction peak; W_{B} is the full-width-at-half-maximum of the second diffraction peak; and I_{C} is the peak intensity of the third diffraction peak.

**Table 1 (To Be Continued)**

| | Li/Mn molar ratio | Sintering temperature (°C) | Sintering time (h) | M element type |
|---|---|---|---|---|
| Embodiment 1 | 1.05 | 940 | 15 | Al |
| Embodiment 2 | 1.05 | 940 | 28 | Al |
| Embodiment 3 | 1.05 | 940 | 8 | Al |
| Embodiment 4 | 1.05 | 880 | 15 | Al |
| Embodiment 5 | 1.05 | 1050 | 15 | Al |
| Embodiment 6 | 1.15 | 940 | 15 | Al |
| Embodiment 7 | 1.00 | 940 | 15 | Al |
| Embodiment 8 | 0.92 | 940 | 15 | Al |
| Embodiment 9 | 1.05 | 940 | 15 | Al |
| Embodiment 10 | 1.05 | 940 | 15 | Al |
| Embodiment 11 | 1.05 | 940 | 15 | Al |
| Embodiment 12 | 1.05 | 940 | 15 | Al |
| Embodiment 13 | 1.05 | 940 | 15 | Al |
| Embodiment 14 | 1.05 | 940 | 15 | Al |
| Embodiment 15 | 1.05 | 940 | 15 | Al |
| Embodiment 16 | 1.05 | 940 | 15 | Cr |
| Embodiment 17 | 1.05 | 940 | 15 | Al+Cr |
| Embodiment 18 | 1.05 | 940 | 15 | Al+Ti |
| Embodiment 19 | 1.05 | 940 | 15 | Al+Mg |
| Embodiment 20 | 1.05 | 940 | 15 | Al+Y |
| Embodiment 21 | 1.05 | 940 | 15 | Al+Cr+Y |
| Embodiment 22 | 1.05 | 940 | 15 | Al+Cr+Y |
| Comparative Embodiment 1 | 1.05 | Conventional method | | / |
| Comparative Embodiment 2 | 0.56 | 850 | 15 | / |

| | | | | |
|---|---|---|---|---|
| In the table, "/" means absence of the substance or performance parameter. | | | | |

**Table 1 (Continued)**

| | M/Mn molar ratio | First diffraction peak position (°) | Second diffraction peak position (°) | Third diffraction peak position (°) |
|---|---|---|---|---|
| Embodiment 1 | 0.03: 1 | 15.4 | 18.3 | 46.8 |
| Embodiment 2 | 0.03: 1 | 15.4 | 18.3 | 46.8 |
| Embodiment 3 | 0.03: 1 | 15.4 | 18.3 | 46.8 |
| Embodiment 4 | 0.03: 1 | 15.4 | 18.3 | 46.8 |
| Embodiment 5 | 0.03: 1 | 15.4 | 18.3 | 46.8 |
| Embodiment 6 | 0.03: 1 | 15.4 | 18.3 | 46.8 |
| Embodiment 7 | 0.03: 1 | 15.4 | 18.3 | 46.8 |
| Embodiment 8 | 0.03: 1 | 15.4 | 18.3 | 46.8 |
| Embodiment 9 | 0.1: 1 | 15.3 | 18.2 | 46.8 |
| Embodiment 10 | 0.06: 1 | 15.4 | 18.2 | 46.8 |
| Embodiment 11 | 0.02: 1 | 15.4 | 18.3 | 46.8 |
| Embodiment 12 | 0.015: 1: 1 | 15.4 | 18.3 | 46.8 |
| Embodiment 13 | 0.012: 1 | 15.4 | 18.3 | 46.8 |
| Embodiment 14 | 0.005: 1 | 15.5 | 18.4 | 46.8 |
| Embodiment 15 | 0.001: 1 | 15.5 | 18.4 | 46.8 |
| Embodiment 16 | 0.03: 1 | 15.4 | 18.3 | 46.8 |
| Embodiment 17 | 0.02:1+0.01:1 | 15.4 | 18.3 | 46.8 |
| Embodiment 18 | 0.02:1+0.01:1 | 15.4 | 18.3 | 46.8 |
| Embodiment 19 | 0.02:1+0.01:1 | 15.4 | 18.3 | 46.8 |
| Embodiment 20 | 0.02:1+0.01:1 | 15.4 | 18.3 | 46.8 |
| Embodiment 21 | 0.02:1+0.01:1+0.01:1 | 15.4 | 18.3 | 46.8 |
| Embodiment 22 | 0.03:1+0.01:1+0.01:1 | 15.4 | 18.2 | 46.8 |
| Comparative Embodiment 1 | / | / | 18.22 | 46.8 |
| Comparative Embodiment 2 | / | / | 18.7 | / |

| | | | | |
|---|---|---|---|---|
| In the table, "/" means absence of the substance or performance parameter. | | | | |

**Table 2**

| | I_{A}/I_{B} | W_{A}/W_{B} | I_{C}/I_{B} | 45 °C specific charge capacity (mAh/g) | 45 °C first-cycle Coulombic efficiency | Mn dissolution amount (ppm) |
|---|---|---|---|---|---|---|
| Embodiment 1 | 0.08 | 1.21 | 0.14 | 245 | 42.9% | 1567 |
| Embodiment 2 | 0.09 | 1.45 | 0.15 | 240 | 45.3% | 2054 |
| Embodiment 3 | 0.13 | 2.36 | 0.18 | 218 | 53.1% | 2576 |
| Embodiment 4 | 0.87 | 1.89 | 0.2 | 197 | 48.7% | 2708 |
| Embodiment 5 | 0.08 | 1.63 | 0.14 | 235 | 46.8% | 2365 |
| Embodiment 6 | 1.32 | 0.65 | 0.22 | 181 | 45.2% | 2906 |
| Embodiment 7 | 0.08 | 1.29 | 0.14 | 241 | 43.5% | 1876 |
| Embodiment 8 | 0.10 | 1.35 | 0.15 | 203 | 44.2% | 1965 |
| Embodiment 9 | 0.05 | 1.52 | 0.08 | 249 | 45.5% | 1098 |
| Embodiment 10 | 0.06 | 1.36 | 0.11 | 246 | 43.6% | 1276 |
| Embodiment 11 | 1.04 | 0.56 | 0.2 | 185 | 45.9% | 2907 |
| Embodiment 12 | 6.23 | 0.69 | 0.22 | 191 | 44.8% | 2706 |
| Embodiment 13 | 9.32 | 0.76 | 0.26 | 192 | 44.7% | 2465 |
| Embodiment 14 | 15.76 | 0.79 | 0.3 | 201 | 44.2% | 2387 |
| Embodiment 15 | 19.97 | 0.83 | 0.35 | 210 | 44.1% | 2208 |
| Embodiment 16 | 0.09 | 1.24 | 0.15 | 239 | 43.1% | 1687 |
| Embodiment 17 | 0.08 | 1.22 | 0.14 | 242 | 43.0% | 1708 |
| Embodiment 18 | 0.10 | 1.25 | 0.15 | 235 | 43.2% | 1845 |
| Embodiment 19 | 0.10 | 1.26 | 0.15 | 236 | 43.2% | 1902 |
| Embodiment 20 | 0.09 | 1.27 | 0.15 | 241 | 43.3% | 1934 |
| Embodiment 21 | 0.08 | 1.25 | 0.14 | 243 | 43.2% | 1623 |
| Embodiment 22 | 0.07 | 1.19 | 0.12 | 247 | 42.7% | 1423 |
| Comparative Embodiment 1 | / | / | 0.38 | 169 | 53.1% | 3012 |
| Comparative Embodiment 2 | / | / | / | 119 | 95.0% | 3567 |

| | | | | | | |
|---|---|---|---|---|---|---|
| In the table, "/" means absence of the substance or performance parameter. | | | | | | |

As can be seen from Embodiments 1 to 22 versus Comparative Embodiments 1 and 2, when the X-ray diffraction pattern of the positive active material exhibits a first diffraction peak in the range of 14.3° to 16.3° and a second diffraction peak in the range of 17.3° to 19.3°, the specific charge capacity of the lithium-ion button battery is relatively high, and the Mn dissolution amount is relatively small. A possible reason is: the first diffraction peak is a (010) characteristic peak of an o-phase (cubic phase) in the lithium manganese oxide. The second diffraction peak is a (001) characteristic peak of the m-phase (monoclinic phase) in the lithium manganese oxide. Through coexistence of the o-phase and the m-phase in the lithium manganese oxide, a solid solution is formed, thereby improving the structural stability of the lithium manganese oxide in the battery in a charging state. Oxygen vacancies exist in the solid solution formed by the coexistence of the two phases, and can facilitate deintercalation of lithium ions, thereby improving the specific charge capacity of the lithium manganese oxide. In addition, through the synergistic effect of the solid solution, the stability of the Mn-O bond is enhanced, thereby suppressing the dissolution of Mn in the lithium manganese oxide, and in turn, improving the service life of the battery.

As can be seen from comparison between Embodiments 1 to 5, Embodiments 7 to 10, Embodiments 12 to 22, and other Embodiments, when 0.05 ≤ I_{A}/I_{B} ≤ 0.9 or 6 ≤ I_{A}/I_{B} ≤ 20, the lithium-ion button battery achieves a higher specific charge capacity. A possible reason is that there is a considerable difference between the contents of the m-phase and the o-phase in the lithium manganese oxide. The two phases can work synergistically to form a solid solution to facilitate deintercalation of lithium ions in the lithium manganese oxide, thereby further improving the specific charge capacity of the lithium manganese oxide. As can be seen from comparison between Embodiments 1 to 2, Embodiments 5 to 10, Embodiments 13 to 22, and other Embodiments, when 0.75 ≤ W_{A}/W_{B} ≤ 1.65, the Mn dissolution amount is further reduced. A possible reason is that both the full-width-at-half-maximum of the o-phase and the full-width-at-half-maximum of the m-phase in the lithium manganese oxide are relatively narrow, and the structural stability is higher, thereby further suppressing the dissolution of Mn in the lithium manganese oxide.

Although illustrative embodiments have been demonstrated and described above, a person skilled in the art understands that the foregoing embodiments cannot be construed as a limitation on this application, and changes, replacements, and modifications may be made to the embodiments without departing from the spirit, principles, and scope of this application.

## Claims

1. A positive active material, wherein the positive active material comprises a lithium manganese oxide, and an X-ray diffraction pattern of the positive active material exhibits a first diffraction peak in a range of 14.3° to 16.3°, and exhibits a second diffraction peak in a range of 17.3° to 19.3°.

2. The positive active material according to claim 1, wherein the positive active material satisfies at least one of the following conditions:
(1) the X-ray diffraction pattern of the positive active material exhibits a third diffraction peak in a range of 45.7° to 47.7°; or
(2) a peak intensity of the first diffraction peak is I_{A}, and a peak intensity of the second diffraction peak is I_{B}, satisfying: 0.05 ≤ I_{A}/I_{B} ≤ 20.

3. The positive active material according to claim 2, wherein 0.05 ≤ I_{A}/I_{B} ≤ 0.9, or 6 ≤ I_{A}/I_{B} ≤ 20.

4. The positive active material according to claim 1, wherein a full-width-at-half-maximum of the first diffraction peak is W_{A}, and a full-width-at-half-maximum of the second diffraction peak is W_{B}, satisfying: 0.3 ≤ W_{A}/W_{B} ≤ 3.

5. The positive active material according to claim 4, wherein 0.75 ≤ W_{A}/W_{B} ≤ 1.65.

6. The positive active material according to claim 2, wherein the peak intensity of the second diffraction peak is I_{B}, and a peak intensity of the third diffraction peak is I_{C}, satisfying: 0.08 ≤ I_{C}/I_{B} ≤ 0.35.

7. The positive active material according to claim 1, wherein the positive active material satisfies at least one of the following conditions:
(1) The lithium manganese oxide contains an M element, the M element comprises at least one of Cr, Al, Mg, Ti, Y, Nb, W, Ga, Zr, V, Sr, Mo, Ru, Ag, Sn, Au, La, Ce, Pr, Nd, Sm, Gd, Cu, Na, Zn, Fe, Co, Ni, or Ca, and a molar ratio between the M element and Mn element in the lithium manganese oxide is 0.001: 1 to 0.1: 1;
(2) an average particle diameter Dᵥ₅₀ of the positive active material is 2 µm to 35 µm;
(3) the lithium manganese oxide has a layered structure;
(4) a molar ratio between Li element and Mn element in the lithium manganese oxide is 0.9 to 1.15; or
(5) the lithium manganese oxide comprises LiₓMn_{y}M_{z}O₂, wherein 0.9 ≤ x ≤ 1.15, 0.9 ≤ y ≤ 1, 0 ≤ z ≤ 0.1, and M comprises at least one of Cr, Al, Mg, Ti, Y, Nb, W, Ga, Zr, V, Sr, Mo, Ru, Ag, Sn, Au, La, Ce, Pr, Nd, Sm, Gd, Cu, Na, Zn, Fe, Co, Ni, or Ca.

8. The positive active material according to claim 1, wherein, when a button battery is assembled from the positive active material and lithium metal, a differential capacity versus voltage dQ/dV curve of the button battery charged in a first cycle exhibits a characteristic peak in a voltage range of 3.5 V to 3.7 V and a characteristic peak in a voltage range of 3.85 V to 4.05 V, and a differential capacity versus voltage dQ/dV curve of the button battery discharged in the first cycle exhibits a characteristic peak in a voltage range of 3.8 V to 4.0 V.

9. A method for preparing a positive active material, comprising:
mixing a manganese-containing oxide, a lithium source, and optionally an M element source to obtain a mixture; and calcining the mixture in a first atmosphere at a first temperature to obtain the positive active material, wherein
the manganese-containing oxide is mixed with the lithium source at a molar ratio of 0.90 to 1.15 between lithium and manganese; and
the first atmosphere is an inert atmosphere.

10. The method for preparing a positive active material according to claim 9, wherein the preparation method satisfies at least one of the following conditions:
(1) the inert atmosphere comprises at least one of nitrogen, argon, or helium;
(2) the first temperature is 880 °C to 1100 °C;
(3) the calcination duration time is 5 hours to 20 hours;
(4) the manganese-containing oxide comprises Mn₃O₄;
(5) the M element comprises at least one of Cr, Al, Mg, Ti, Y, Nb, W, Ga, Zr, V, Sr, Mo, Ru, Ag, Sn, Au, La, Ce, Pr, Nd, Sm, Gd, Cu, Na, Zn, Fe, Co, Ni, or Ca;
(6) the M element source comprises at least one of CrO₂, Al₂O₃, MgO, TiO₂, or Y₂O₃;
(7) the manganese-containing oxide and the M element source are mixed at a M:Mn molar ratio of 0.001: 1 to 0.1: 1 between the M element and Mn element; or
(8) the lithium source comprises at least one of lithium hydroxide, lithium carbonate, lithium acetate, lithium nitrate, or lithium sulfate.

11. An electrochemical device, wherein the electrochemical device comprises the positive active material according to any one of claims 1 to 8 or a positive active material prepared by the method for preparing a positive active material according to any one of claims 9 to 10.

12. An electrical device, comprising the electrochemical device according to claim 11.
